# EUROPEAN PATENT APPLICATION

(11) **EP 2 563 035 A1**
(43) Date of publication of application: **27.02.2013**
(21) Application number: 12169439.2
(22) Date of filing: 25.05.2012
(51) Int. Cl.: H04N 21/443, H04N 21/442, H04N 21/485, G06F 1/32

(54) **Control method and display apparatus for managing system power**

(30) Priority: 25.08.2011 KR 20110085027
(71) Applicant: Samsung Electronics Co., Ltd., Suwon-si, Gyeonggi-do, 443-742 (KR)
(72) Inventor: Kim, Sang-won, Seoul (KR)
(74) Representative: Waddington, Richard

(57) **Abstract**

Disclosed are a control method and display apparatus for managing system power. The display apparatus including: a display unit; an image processor which includes a plurality of image processing blocks which respectively process an image signal according to preset image processing processes; a power supply unit which supplies power to the image processor to activate the image processing blocks; and a controller which displays a UI image indicating whether each of the image processing blocks is activated on the display unit and controls the UI image to display information regarding a reduced consumption level of the supplied power due to an inactivated image processing block from among the image processing blocks.

## Description

### BACKGROUND

### 1. Field

Apparatuses and methods consistent with the exemplary embodiments relate to a display apparatus and a control method thereof. More particularly, the methods and apparatuses relate to a display apparatus which efficiently manages system power of the apparatus, and a control method thereof.

### 2. Description of the Related Art

A display apparatus processes image signals input from external image supply sources in various ways to display images on a display panel, such as a liquid crystal display (LCD). In general, a display apparatus available to general users is configured as a TV or as a monitor. For example, a display apparatus configured as a TV conducts various processes, such as tuning and decoding, on broadcast signals received from the outside, thereby providing images of broadcast channels which are desired by users.

With developments in technology and an increase in contents, a display apparatus not only provides images but performs and provides various and complicated functions. Further, when processing image signals, formats of image signals input from image sources become diverse, and thus various image processing blocks corresponding to various formats of image signals are embedded in a display apparatus.

In order to activate such image processing blocks to perform processing operations, power is needed. However, as display apparatuses improve in function, more image processing blocks are needed or data processing quantitatively increases, and thus power consumption also grows. Management of system power is important in view of saving consumed energy of the display apparatus. However, it is difficult for a user to identify image processing blocks operating in the display apparatus and it is not easy to check how much power a particular image processing block uses among power consumption of the display apparatus. That is, it is not easy to manage system power in a conventional display apparatus.

### SUMMARY

According to the present invention there is provided an apparatus and method as set forth in the appended claims. Other features of the invention will be apparent from the dependent claims, and the description which follows.

The foregoing and/or other aspects may be achieved by providing a display apparatus for managing system power, the apparatus including: a display unit; an image processor which includes a plurality of image processing blocks which process an image signal according to preset image processing processes, respectively; a power supply unit which supplies power to the image processor to activate the image processing blocks; and a controller which displays a UI image indicating whether each of the image processing blocks is activated on the display unit and controls the UI image to display information regarding a consumption reduction level of the supplied power due to an inactivated image processing block from among the image processing blocks.

The UI image may be provided to selectively inactivate each of the image processing blocks through user input unit of the display apparatus. The controller may display the information regarding the level change which corresponds to a selection result through the UI image.

The information regarding the level may include power consumption of the power supply unit.

The UI image may include a plurality of groups of image processing blocks which are selectively used and which correspond to characteristics of an image signal input to the image processor from among the image processing blocks, and the controller may inactivate an image processing block in the groups which are not selected in processing the image signal from among the plurality of groups.

The characteristics of the image signal may include a transmission standard of the image signal received by the display apparatus.

The UI image may include a plurality of operation modes including preset setting information regarding operations of the image processing blocks and display the information regarding the level which corresponds to each of the operation modes.

The setting information may include status setting values of the display apparatus, and at least part of the setting values may be set to different values in each of the operation modes.

The controller may control the power supply unit to selectively supply power to the image processing blocks which correspond to the selection result.

The UI image may be provided to select a setting of each operation of the image processing blocks through the user input unit of the display apparatus.

Another aspect may be achieved by providing a control method of a display apparatus for managing system power including: displaying a UI image indicating whether each of a plurality of image processing blocks which respectively process an image signal according to preset image processing processes is activated; and displaying information regarding a reduction in the consumption level of supplied power due to an inactivated image processing block from among the image processing blocks of the UI image.

The UI image may be provided to selectively inactivate each of the image processing blocks through a user input unit of the display apparatus, and the displaying of the information regarding the reduction of the consumption level of the supplied power on the UI image may include receiving selection of at least one of the image processing blocks through the UI image and displaying the information regarding the consumption level changing which corresponds to the selection result.

The information regarding the level may include power consumption of a power supply unit.

The UI image may include a plurality of groups of image processing blocks which are selectively used and which correspond to characteristics of an image signal input to the display apparatus from among the image processing blocks, and the displaying the information regarding the reduction of the consumption level of the supplied power on the UI image may further include inactivating an image processing block in the groups which are not selected in processing the image signal from among the plurality of groups.

The characteristics of the image signal may include a transmission standard of the image signal received by the display apparatus.

The UI image may include a plurality of operation modes including preset setting information regarding operations of the image processing blocks and displays the information regarding the level which corresponds to each of the operation modes.

The setting information may include status setting values of the display apparatus, and at least part of the setting values may be set to different values in each of the operation modes.

The displaying of the information regarding the reduction in the consumption level of the supplied power on the UI image may further include selectively supplying power to the image processing blocks which correspond to the selection result.

The UI image may be provided to select a setting of each operation of the image processing blocks through the user input unit of the display apparatus.

Another aspect of an exemplary embodiment may include a display apparatus comprising an image processor including a plurality of image processing blocks which respectively process an image signal according to preset image processing processes; the image processor being adapted to receive power from a power supply unit for activation of the image processing blocks; and a controller which displays a UI image indicating whether each of the image processing blocks is activated on the display unit, wherein the controller is configured to control the UI image to display information regarding a reduced consumption level of supplied power due to an inactivated image processing block.

An exemplary embodiment may further include a control method of a display apparatus for managing system power, the control method comprising: displaying a UI image indicating whether each of a plurality of image processing blocks is activated; inactivating one or more image processing blocks as necessary for managing system power, and displaying on the UI image information regarding a reduced consumption level of supplied power due to an inactivated image processing block from among the image processing blocks.

An exemplary embodiment may additionally include: wherein an image processing block is selectively inactivated through a user input unit of a display apparatus,

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of a display apparatus according to a first exemplary embodiment.

FIG. 2 is a block diagram illustrating an image processing block of an image processor of the display apparatus of FIG. 1.

FIG. 3 illustrates that RF processing is selected from a UI image displayed on the display apparatus of FIG. 1.

FIG. 4 illustrates that HDMI processing is selected from the UI image displayed on the display apparatus of FIG. 1.

FIG. 5 illustrates a UI image displayed on a display apparatus according to a second exemplary embodiment.

FIG. 6 illustrates a UI image displayed on a display apparatus according to a third exemplary embodiment.

FIG. 7 is a flowchart illustrating a control method of a display apparatus according to a fourth exemplary embodiment.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

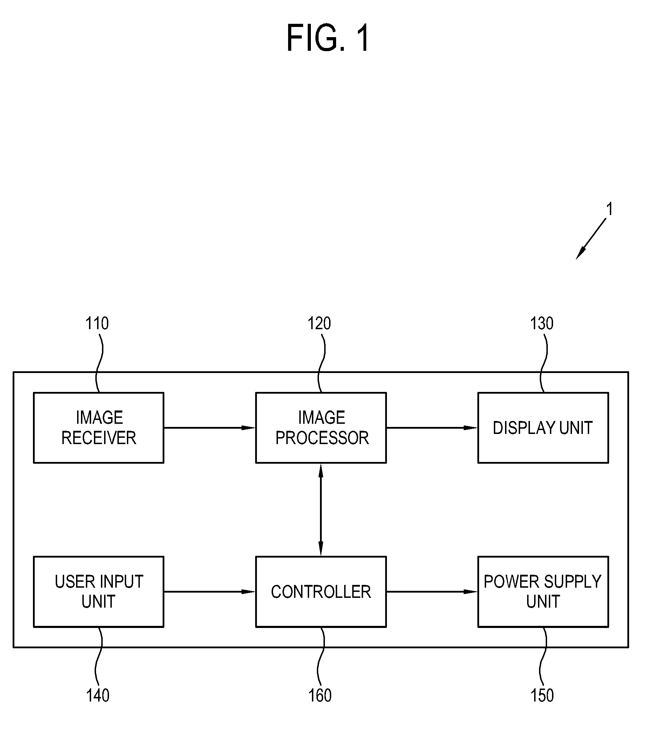

FIG. 1 is a block diagram of a display apparatus 1 according to a first exemplary embodiment.

As shown in FIG. 1, the display apparatus 1 according to the exemplary embodiment includes an image receiver 110 receiving an image signal from an external image supply source (not shown), an image processor 120 processing an image signal received by the image receiver 110 according to various preset image processing processes, a display unit 130 displaying an image based on an image signal processed by the image processor 120, a user input unit 140 manipulated by a user, and a power supply unit 150 supplying system power of the display apparatus 1.

The image receiver 110 receives an image signal wirelessly or through a wired connection and transmits the signal to the image processor 120. The image receiver 110 may be configured as various types which correspond to standards of received image signals and types of the display apparatus 1. When an image signal is a broadcast signal, the image receiver 110 includes a tuner to tune the broadcast signal according to each channel.

When the display apparatus 1 is configured as a TV, the image receiver 110 may receive a radio frequency (RF) signal transmitted from a broadcasting station (not shown), or receive image signals according to composite/component video, super video, SCART, and high definition multimedia interface (HDMI), DisplayPort, unified display interface (UDI), or wireless HD standards. Alternatively, when the display apparatus 1 is a computer monitor, the image receiver 110 may be configured in a D-subminiature (D-SUB) standard to transmit red, green, and blue (RGB) signals based on a video graphics array (VGA) format, in digital video interface (DVI) standards including DVI-analog (DVI-A), DVI-integrated digital/analog (DVI-I), and DVI-digital (DVI-D), in a high-definition multimedia interface (HDMI) standard, and the like.

The image processor 120 performs various preset image processing processes on a received image signal. The image processor 120 outputs the processed image signal to the display panel 130, so that an image based on the processed image signal is displayed on the display panel 130.

For example, the image processor 120 may perform, without being limited to, decoding and encoding corresponding to various image formats, de-interlacing, frame refresh rate conversion, scaling, noise reduction to improve image quality, detail enhancement, and the like. The image processor 120 will be described in detail, below.

The display unit 130 displays an image based on an image signal output from the image processor 120. The display unit 300 may be configured in various display types using liquid crystals, plasma, light emitting diodes, organic light emitting diodes, a surface conduction electron emitter, a carbon nano-tube, nano-crystals, or the like, but is not limited thereto.

The user input unit 140 outputs various preset control signals/commands according to manipulation/input by a user and transmits the signals/commands to the image processor 120 or the controller 160. The image processor 120 or the controller 160 performs a process corresponding to characteristics/information of the signal transmitted from the user input unit 140 according to the signal.

The user input unit 140 may need to allow easy access of a user and thus is configured in various forms, such as a menu key, an input panel, which are installed on an outside of the display apparatus 1, or a remote controller separated from the display apparatus 1.

The power supply unit 150 supplies system power for operating the display apparatus 1. That is, the power supply unit 150 provides operational power for the entire components of the display apparatus 1, including the display unit 130. The power supply unit 150 receives alternating power from the outside and converts the alternating power into direct power in various levels which correspond to the respective components, to provide power to the components.

A controller 160 will be described in detail.

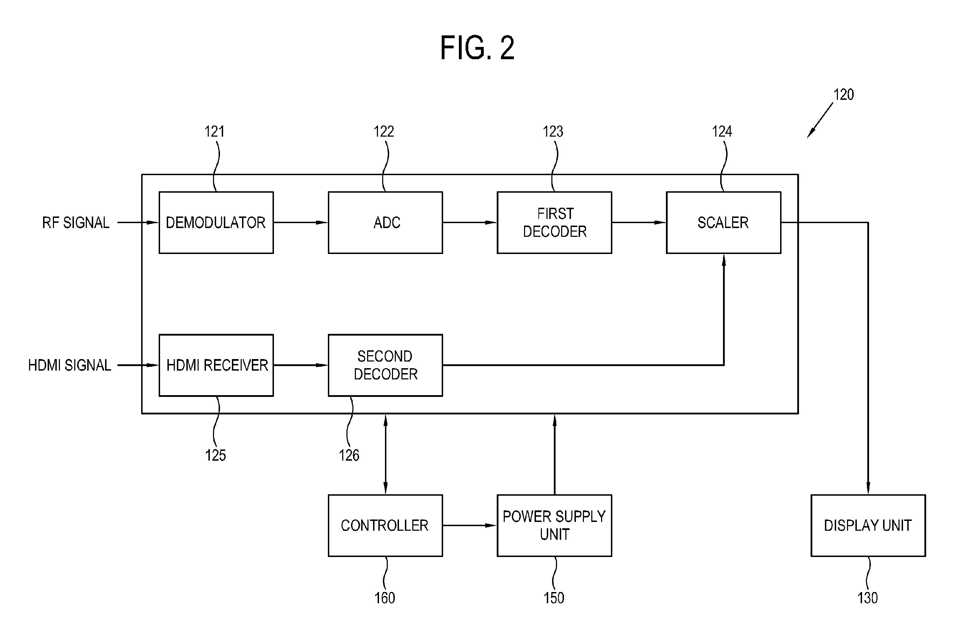

Hereinafter, a configuration of the image processor 120 is described in detail with reference to FIG. 2. FIG. 2 is a block diagram illustrating an example of image processing blocks of the image processor 120.

As shown in FIG. 2, the image processor 120 includes a plurality of image processing blocks 121, 122, 123, 124, 125, and 126 which correspond, respectively, to various image processing processes. The image processing blocks 121, 122, 123, 124, 125, and 126 may be configured as hardware, such as chip sets or cores, or may be codes of a program in a process executed by the image processor 120.

The exemplary embodiment illustrates two situations where an image signal received from the image receiver 110 is an RF signal or an HDMI signal. Here, for concise description, part of the image processing blocks 121, 122, 123, 124, 125, and 126 of the image processor 120 provided as a real product are described only. It should not be understood that omitted components are unnecessary in the real image processor 120.

The image processor 120 includes a plurality of image processing blocks 121, 122, 123, 124, 125, and 126 for each process. For example, the image processing blocks 121, 122, 123, 124, 125, and 126 may be configured, respectively, as a demodulator 121 demodulating an RF signal, an A/D converter 122 converting an analog signal into a digital signal, a first decoder 123 which corresponds to a preset format, a scaler 124 which scales an image signal to a preset resolution, an HDMI receiver 125 which receives an HDMI signal, and a second decoder 126 decoding an HDMI signal.

With this configuration, when an image signal received from the image receiver 110 is an RF signal, the demodulator 121, the A/D converter 122, the first decoder 123, and the scaler 124 are used among the image processing blocks 121, 122, 123, 124, 125, and 126 to process the image signal. However, when an image signal received from the image receiver 110 is an HDMI signal, the HDMI receiver 125, the second decoder 126 and the scaler 124 are used among the image processing blocks 121, 122, 123, 124, 125, and 126 to process the image signal.

That is, when an image signal is an RF signal, the HDMI receiver 125 and the second decoder 126 are not used. When an image signal is an HDMI signal, the demodulator 121, the A/D converter 122 and the first decoder 123 are not used. Thus, when power from the power supply unit 150 is supplied to activate the entire image processing blocks 121, 122, 123, 124, 125, and 126, system power is unnecessarily consumed due to image processing blocks 121, 122, 123, 124, 125, or 126 which are not used according to characteristics of an image signal.

Thus, the display apparatus 1 according to the exemplary embodiment includes the controller 160 which displays a UI image on the display unit 130, and the UI image indicates whether each of the image processing blocks 121, 122, 123, 124, 125, and 126 is activated.

Here, the controller 160 controls the power supply unit 150 to selectively supply power with respect to image processing blocks 121, 122, 123, 124, 125, or 126 selected to be inactivated through the user input unit 140 from among the image processing blocks 121, 122, 123, 124, 125, and 126 displayed on the UI image. That is, the controller 160 blocks the supply of power to the image processing blocks 121, 122, 123, 124, 125, or 126 which are selected to be inactivated on the UI image, thereby inactivating the image processing blocks 121, 122, 123, 124, 125, or 126.

Further, the controller 160 calculates information regarding a reduced consumption level of power supplied from the power supply unit 150 due to the inactivated image processing blocks 121, 122, 123, 124, 125, or 126, for example, a power consumption rate of the power supply unit 150, and display the information on the UI image. That is, the controller 160 displays the power consumption rate in real time on the UI image, the power consumption rate changing in a manner corresponding to a result of selecting image processing blocks 121, 122, 123, 124, 125, or 126 to be inactivated through the UI image.

Accordingly, a user selectively inactivates an image processing block 121, 122, 123, 124, 125, or 126 which is not considered to be necessarily activated, at present, through a UI image, thereby reducing the energy consumed by system power. Further, the degree of reduced energy consumption of system power based on a selection result is indicated in real time, thereby helping the user easily recognize the effect of power saving.

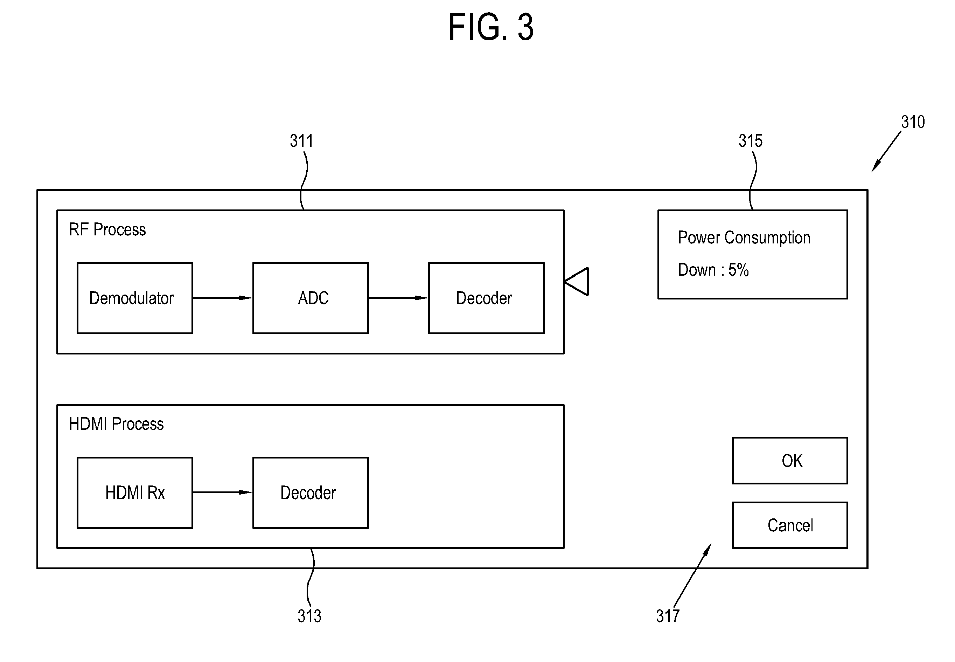

FIG. 3 illustrates a situation where RF processing is selected from a UI image 310 displayed on the display unit 130.

As shown in FIG. 3, the controller 160 displays the UI image 310 including a plurality of group images 311 and 313 obtained by grouping the selectively used image processing blocks 121, 122, 123, 124, 125, and 126 which correspond to characteristics of an image signal to be processed. An example of a characteristic is, a transmission standard of the image signal. Display of the UI image 310 may occur based on various events occurring in the display apparatus 1; for example, events corresponding to a particular command from the user input unit 140.

The exemplary embodiment is explained with reference to two examples, which are an RF signal and an HDMI signal. However, these examples are provided for illustrative purposes only, and the exemplary embodiment may also be applied to processing various standards of signals.

The group images 311 and 313 includes a first group 311 associated with processing an RF signal and a second group 313 associated with processing an HDMI signal. The first group 311 includes image processing blocks 121, 122, 123, and 124 used to process the RF signal from among the image processing blocks 121, 122, 123, 124, 125, and 126, and the second group 313 includes image processing blocks 124, 125, and 126 used to process the HDMI signal from among the image processing blocks 121, 122, 123, 124, 125, and 126. The groups 311 and 313 may include the same image processing block 124.

Information included in the group images 311 and 313 may include, without being limited, to names or details of the image processing blocks 121, 122, 123, 124, 125, and 126 used in a process, or may only include a name of the process.

When an image signal to be processed is an RF signal, a user selects the first group 311 corresponding to RF processing from the UI image through the user input unit 140.

When the first group 311 is selected, the controller 160 marks the image processing blocks 125 and 126 except for the image processing block 124 included in the first group 311 from among the image processing blocks 124, 125, and 126 associated with the second group 313 which is presently unselected .

The controller 160 calculates saved power consumption of the power supply unit 150 when the marked image processing blocks 125 and 126 are inactivated and displays an image 315 indicating the calculated power consumption or a reduced rate of power consumption corresponding thereto, on the UI image 310. The user sees the image 315 and then inactivates the image processing blocks 125 and 126 associated with HDMI processing, thereby quantitatively identifying an extent of energy savings.

The power consumption may be calculated by various methods. For example, the controller 160 includes a nonvolatile memory (not shown) that stores a profile of power consumption values which correspond to activation/inactivation of the respective image processing blocks 121, 122, 123, 124, 125, and 126 and calculates power consumption using a value which correspond to a selection result read out from the memory.

To apply a selection result to the display apparatus 1, the user selects a selection done item 317 of the UI image 310. Accordingly, the controller 160 maintains supply of power to activate the image processing blocks 121, 122, 123, and 124 which are related to the first group 311 and blocks the supply of power to inactivate the image processing blocks 125 and 126 of the second group 313.

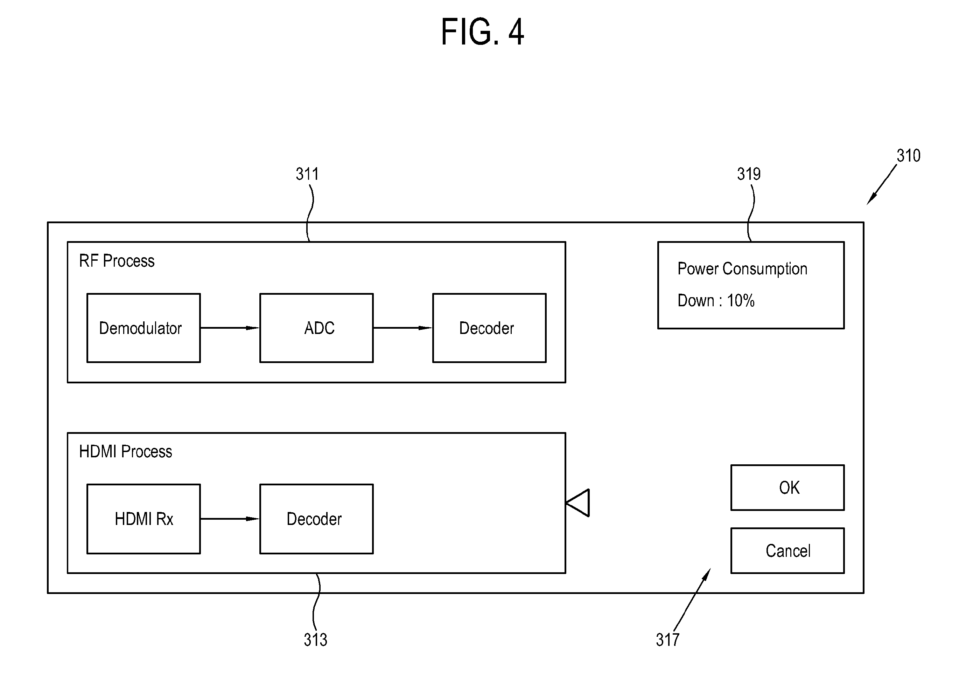

FIG. 4 illustrates, a situation where HDMI processing is selected from the UI image 310.

As shown in FIG. 4, when an image signal to be processed is an HDMI signal, a user selects the second group 313 through the user input unit 140.

When the second group 313 is selected, the controller 160 marks the image processing blocks 121, 122, and 123 except for the image processing block 124 included in the second group 313 from among the image processing blocks 121, 122, 123, and 124 associated with the first group 311 which are presently unselected.

The controller 160 calculates saved power consumption of the power supply unit 150 when the marked image processing blocks 121, 122, and 123 are inactivated and displays an image 319 indicating the calculated power consumption or a rate of reduction of power consumption which corresponds thereto on the UI image 310.

As the user selects the selection done item 317, the controller 160 maintains a supply of power to activate the image processing blocks 124, 125, and 126 related to the second group 313, and blocks supply of power to inactivate the image processing blocks 121, 122, and 123 of the first group 311.

As described above, the display apparatus 1 according to the exemplary embodiment may selectively inactivate unused image processing blocks 121, 122, 123, 124, 125, or 126 which correspond to characteristics of an image signal input to the image processor 120 to save system power. Further, the display apparatus 1 may quantitatively display a rate of reduced power consumption which corresponds to a selection result.

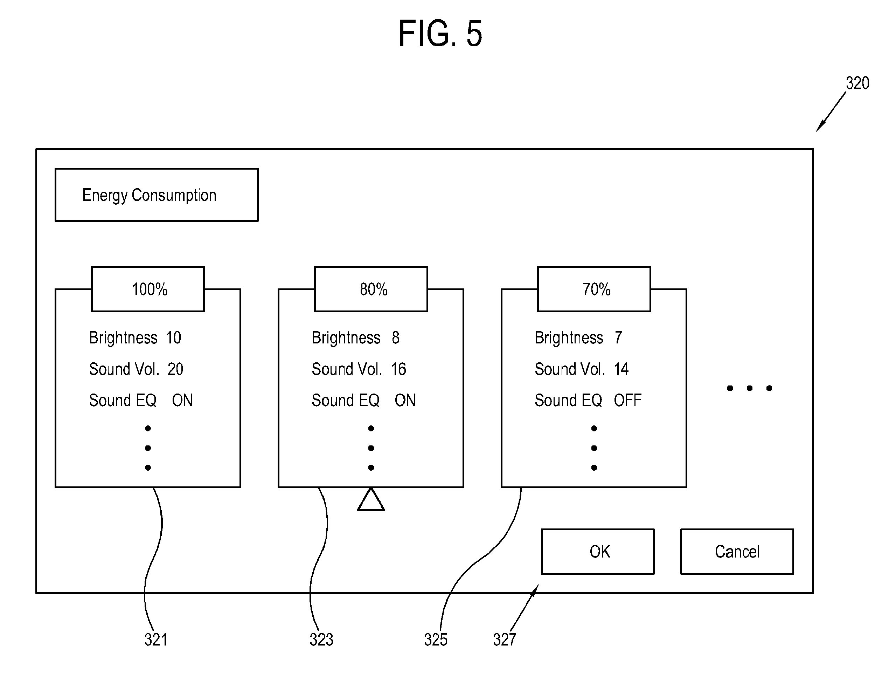

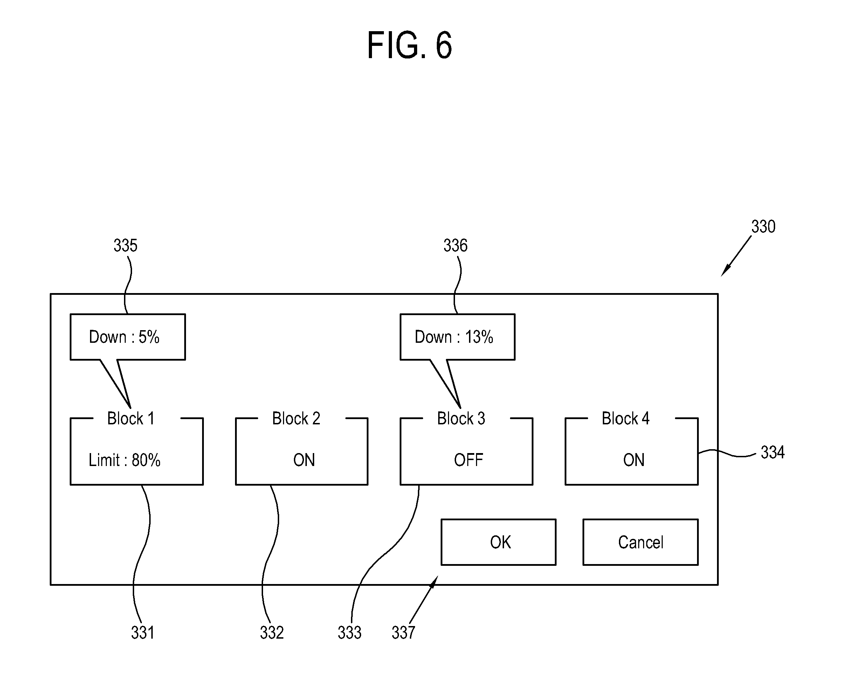

The configuration of the UI image may be provided in a different form from that of the exemplary embodiment. Hereinafter, various configurations of a UI image will be described with reference to FIGS. 5 and 6.

FIG. 5 is a UI image 320 displayed on a display apparatus 1 according to a second exemplary embodiment.

As shown in FIG. 5, the UI image 320 includes a plurality of selectable operation mode items 321, 323, and 325.

The items 321, 323, and 325 each include information regarding operations of a plurality of image processing blocks 121, 122, 123, 124, 125, and 126, for examples, information regarding whether the image processing blocks 121, 122, 123, 124, 125, and 126 are activated/inactivated and setting information regarding operations of the image processing blocks 121, 122, 123, 124, 125, and 126. Referring to FIG. 6, the information regarding activation/inactivation may include information regarding whether a sound equalizer is on/off, and the setting information may include status setting values of the display apparatus 1, such as brightness, sound volume, and the like, which are adjusted at a numerical level.

In addition, various parameters may be included in the items 321, 323, and 325, and these examples of the exemplary embodiment are not to be in any way construed as limiting the scope of the present inventive concept.

At least part of setting values included in the respective items 321, 323, and 325 are set up differently in each of the operation mode items 321, 323, and 325. That is, part of setting values included in the items 321, 323, and 325 are set to the same value, but at least part thereof are set to different values.

When such information is applied to the display apparatus 1, the respective items 321, 323, and 325 include information regarding a reduced consumption level of power supplied from the power supply unit 150. For example, with reference to FIG. 5, a first item 321 shows that system power consumption is 100% when the display apparatus 1 is set to a brightness of 10, a sound volume of 20, and a sound equalizer is ON.

A second item 323 shows that system power consumption is 80%, which provides a relative saving of 20%, when the display apparatus 1 is set to a brightness of 8, a sound volume of 16, and a sound equalizer of ON. A third item 325 shows that system power consumption is 70%, which provides further savings, when the display apparatus 1 is set to a brightness of 7, a sound volume of 14, and a sound equalizer is OFF.

Accordingly, the user may quantitatively identify an extent of power saving effects through the UI image 320 with respect to each of the operation modes 321, 323, and 325 including the setting information regarding operations of the image processing blocks 121, 122, 123, 124, 125, and 126.

The user selects any one of the items 321, 323, and 325 through the user input unit 140 and selects the selection done 327. The controller 160 controls the power supply unit 150 and the image processor 120 based on the selection done 327 so that setting information regarding the selected item 321, 323, or 325 is applied to the display apparatus 1. Accordingly, the user may expect power saving effects of the display apparatus 1 which correspond to the selected item 321, 323, or 325.

FIG. 6 illustrates a UI image 330 according to a third exemplary embodiment.

As shown in FIG. 6, the UI image 330 respectively includes items 331, 332, 333, and 334 which correspond to image processing blocks. FIG. 6 shows only the items 331, 332, 333, and 334 which correspond to part of possible image processing blocks included in the image processor 120.

The items 331, 332, 333, and 334 may be provided to select activation/inactivation of an image processing block or to adjust a processing limit or a processing result level of an image processing block.

For example, a first item 331 shows that a processing limit of an image processing block is adjusted to 80% of a conventional setting. Further, a third item 333 shows that an image processing block is inactivated. The items 331, 332, 333, and 334 may be adjusted through the user input unit 140.

Here, when power saving effects occur according to the adjustment of the settings of items 331, 332, 333, and 334, the controller 160 displays images 335 and 336 indicating reduced power consumption levels which correspond to items 331 and 333.

For example, the UI image 330 shows that power is saved by 5% due to a decrease in load of the corresponding image processing block by adjustment of the first item 331 and power is saved by 13% due to inactivation of an image processing block which corresponds to the third item 333.

Accordingly, a user separately controls the items 331, 332, 333, and 334, thereby quantitatively identifying power saving effects appearing due to control of corresponding items 331, 332, 333, and 334.

When adjustment of the respective items 331, 332, 333, and 334 is done, the user selects the selection done item 337 and the controller 160 applies a selection result through the UI image 330 to status of the display apparatus 1.

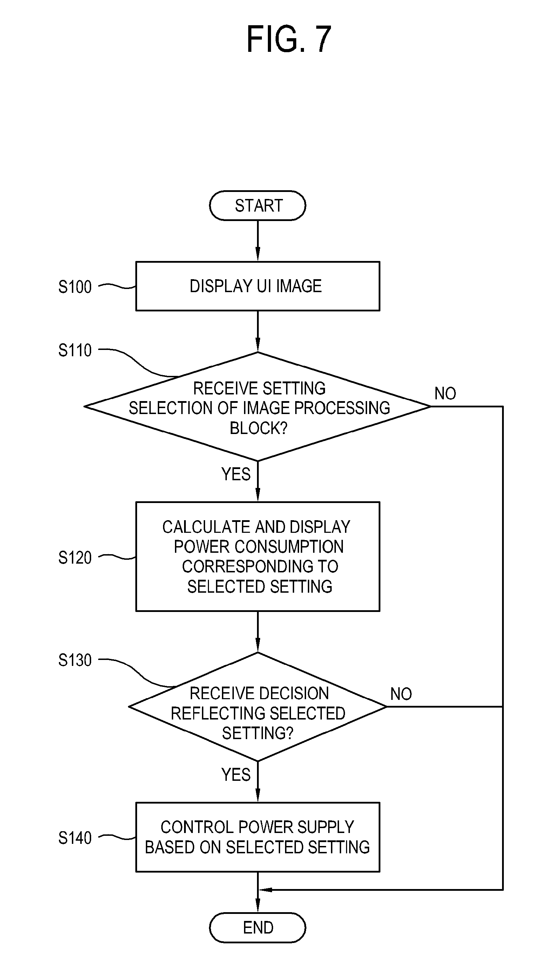

Hereinafter, a control method of a display apparatus 1 according to a fourth exemplary embodiment is described with reference to FIG. 7. FIG. 7 is a flowchart illustrating the control method.

The display apparatus 1 according to the exemplary embodiment may employ the configuration of the display apparatus 1 according to the first exemplary embodiment.

As shown in FIG. 7, a controller 160 displays a UI image based on occurrence of a preset event (S100). The controller 160 receives a selection of settings of image processing blocks 121, 122, 123, 124, 125, and 126 from the user input unit 140 while the UI image is displayed (S110).

When the setting selection is received, the controller 160 calculates and displays power consumption which corresponds to the selected setting (S120).

When a decision reflecting the selected setting is received (S130), the controller 160 controls power supply of the power supply unit 150 based on the selected setting (S140).

Accordingly, the user may selectively inactivate a plurality of image processing blocks 121, 122, 123, 124, 125, and 126, thereby easily identifying the effect of power saving which results from inactivation of the image processing blocks 121, 122, 123, 124, 125, and 126.

Although a few exemplary embodiments have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit;
an image processor which comprises a plurality of image processing blocks processing an image signal according to preset image processing processes, respectively;
a power supply unit which supplies power to the image processor to activate the image processing blocks; and
a controller which displays a UI image indicating whether each of the image processing blocks is activated on the display unit and controls the UI image to display information about a consumption reduction level of the supplied power due to an inactivated image processing block among the image processing blocks.

2. The display apparatus of claim 1, wherein the UI image is provided to selectively inactivate each of the image processing blocks through the user input unit of the display apparatus, and the controller displays the information about the level changing corresponding to a selection result through the UI image.

3. The display apparatus of claim 2, wherein the information about the level comprises power consumption of the power supply unit.

4. The display apparatus of claim 2, wherein the UI image comprises a plurality of groups of image processing blocks selectively used corresponding to characteristics of an image signal input to the image processor among the image processing blocks, and the controller inactivates an image processing block in the groups which are not selected in processing the image signal among the plurality of groups.

5. The display apparatus of claim 4, wherein the characteristics of the image signal comprise a transmission standard of the image signal received by the display apparatus.

6. The display apparatus of claim 2, wherein the UI image comprises a plurality of operation modes including preset setting information about operations of the image processing blocks and displays the information about the level corresponding to each of the operation modes.

7. The display apparatus of claim 6, wherein the setting information comprises status setting values of the display apparatus, and at least part of the setting values are set to different values in each of the operation modes.

8. The display apparatus of claim 2, wherein the controller controls the power supply unit to selectively supply power to the image processing blocks corresponding to the selection result.

9. The display apparatus of claim 2, wherein the UI image is provided to select a setting of each operation of the image processing blocks through the user input unit of the display apparatus.

10. A control method of a display apparatus comprising:
displaying a UI image indicating whether each of a plurality of image processing blocks respectively processing an image signal according to preset image processing processes is activated; and
displaying information about a consumption reduction level of supplied power due to an inactivated image processing block among the image processing blocks on the UI image.

11. The control method of claim 10, wherein the UI image is provided to selectively inactivate each of the image processing blocks through a user input unit of the display apparatus, and the displaying of the information about the consumption reduction level of the supplied power on the UI image comprises receiving selection of at least one of the image processing blocks through the UI image and displaying the information about the level changing corresponding to the selection result.

12. The control method of claim 11, wherein the information about the level comprises power consumption of a power supply unit.

13. The control method of claim 11, wherein the UI image comprises a plurality of groups of image processing blocks selectively used corresponding to characteristics of an image signal input to the display apparatus among the image processing blocks, and the displaying of the information about the consumption reduction level of the supplied power on the UI image further comprises inactivating an image processing block in the groups which is not selected in processing the image signal among the plurality of groups.

14. The control method of claim 11, wherein the UI image comprises a plurality of operation modes including preset setting information about operations of the image processing blocks and displays the information about the level corresponding to each of the operation modes.

15. The control method of claim 11, wherein the displaying of the information about the consumption reduction level of the supplied power on the UI image further comprises selectively supplying power to the image processing blocks corresponding to the selection result.
